Europäisches Patentamt

European Patent Office

Office européen des brevets

(11) Veröffentlichungsnummer: **0 303 136 B1**

(12) **EUROPÄISCHE PATENTSCHRIFT**

(45) Veröffentlichungstag der Patentschrift: **03.03.93**

(51) Int. Cl.5: **C09D 5/34**, C08L 75/04

(21) Anmeldenummer: **88112445.7**

(22) Anmeldetag: **01.08.88**

(54) **Lagerfähige Fugendichtungsmasse.**

(30) Priorität: **10.08.87 DE 3726547**

(43) Veröffentlichungstag der Anmeldung:
**15.02.89 Patentblatt 89/07**

(45) Bekanntmachung des Hinweises auf die
Patenterteilung:
**03.03.93 Patentblatt 93/09**

(84) Benannte Vertragsstaaten:
**AT BE CH DE ES FR GB IT LI NL SE**

(56) Entgegenhaltungen:
**EP-A- 0 200 801**
**EP-A- 0 210 859**
**US-A- 4 533 598**

(73) Patentinhaber: **Henkel Kommanditgesellschaft
auf Aktien**
**Postfach 1100 Henkelstrasse 67**
**W-4000 Düsseldorf-Holthausen(DE)**

(72) Erfinder: **Podola, Tore**
**Deusserstrasse 31**
**W-4019 Monheim(DE)**
Erfinder: **Ernst, Wolfgang**
**Bahlenstrasse 142**
**W-4000 Düsseldorf 13(DE)**
Erfinder: **Emmerling, Winfried, Dr.**
**Lärchenweg 6**
**W-4006 Erkrath 1(DE)**

**Beschreibung**

Die Erfindung liegt auf dem Gebiet der feuchtigkeitshärtenden Fugendichtungsmassen auf Polyurethanbasis. Sie beschreibt ein derartiges System mit verbesserter Lagerstabilität.

Feuchtigkeitshärtende Dichtungsmassen auf Polyurethanbasis sind seit langem bekannt. Sie bestehen im wesentlichen aus einem Polyurethan-Prepolymeren mit Isocyanatendgruppen und einem darin als Thixotropierungsmittel enthaltenen gequollenen Polymeren als Füllstoff. Die Lagerfähigkeit derartiger Massen ist durch Reaktion der Isocyanatgruppen mit anderen Bestandteilen oder mit eindiffundierendem Wasser begrenzt. Weiterhin kann die Verarbeitbarkeit auch dadurch leiden, daß sich der Quellungsgrad des enthaltenen Polymeren bei der Lagerung ändert. Um die sichere Verarbeitbarkeit der Massen auch über längere Zeiträume zu gewährleisten, besteht daher ein Bedarf an Produkten mit erhöhter Lagerstabilität.

Aufgabe der Erfindung ist es daher, eine feuchtigkeitshärtende Fugendichtungsmasse auf Polyurethanbasis bereitzustellen, die in ihrer Lagerfähigkeit verbessert ist.

Gegenstand der Erfindung sind somit feuchtigkeitshärtende Fugendichtungsmassen auf Basis von Polyurethanprepolymeren, quellfähigen Polymerpulvern, Weichmachern und weiteren Hilfsstoffen, dadurch gekennzeichnet, daß sie enthalten:

20 - 40 Gew.-% Polyurethan-Prepolymeren
20 - 40 Gew.-% quellfähige Polymerpulver
15 - 35 Gew.-% Weichmacher (Quellmittel)
1 - 10 Gew.-% Quellhilfsmittel
1 - 10 Gew.-% Pigmente und Farbstoffe
0,01 - 2 Gew.-% Katalysatoren und sonstige Hilfsstoffe
1 - 10 Gew.-% Stabilisierungsmittel,

wobei als Stabilisierungsmittel Olefine der Kettenlänge C8 - C20 enthalten sind.

Feuchtigkeitshärtende Dichtungsmassen sind auf Basis von einer Vielzahl von Polyurethan-Prepolymeren herstellbar. Polyurethanprepolymere werden üblicherweise durch Umsetzung eines Polyols mit einem Überschuß eines Polyisocyanats erhalten. Als Polyol-Komponente können sowohl niedermolekulare als auch hochmolekulare Verbindungen eingesetzt werden. Niedermolekulare Verbindungen, die als Polyol-Komponenten für Polyurethanprepolymere verwendet werden können, sind beispielweise Glykole, Glycerin, Butandiol und Trimethylolpropan. Als höhermolekulare Polyol-Komponente werden in der Regel Polyetherpolyole oder Polyesterpolyole verwendet. Polyetherpolyole werden durch Umsetzung eines Epoxids oder Tetrahydrofurans mit einer niedermolekularen Polyol-Komponente dargestellt, wobei als Epoxid beispielsweise Ethylenoxid, Propylenoxid, Butylenoxid, Styroloxid, Cyclohexenoxid, Trichlorbutylenoxid und Epichlorhydrin und als Polyol Verbindungen wie Ethylen-, Diethylen- und Propylenglykol Verwendung finden.

Polyester als Ausgangsstoffe für Polyurethanprepolymere werden üblicherweise durch Umsetzung von Hydroxyl-Verbindungen mit Carbonsäuren dargestellt. Als Hydroxyl-Verbindungen können beispielsweise eingesetzt werden Ethylenglykol, Diethylenglykol, Triethylenglykol, 1,2-Propylenglykol, Dipropylenglykol, 1,4-Butandiol, 1,6-Hexandiol, Neopentylglykol, 1,3-Butandiol, Trimethylolpropan, Trimethylolethan und Glycerin. Als Säure-Komponenten können Verbindungen wie Adipinsäure, Phthalsäure, Oxalsäure, Maleinsäure, Bernsteinsäure, Glutarsäure, Azelainsäure, Sebacinsäure sowie Tricarbonsäuren Verwendung finden. Auch durch ringöffnende Polymerisation von beispielsweise epsilon-Caprolacton oder Methyl-epsilon-caprolacton lassen sich geeignete Polyester zur Darstellung von Polyurethanprepolymeren gewinnen. Neben Polyestern und Polyethern als Polyol-Komponente können aber auch Naturstoffe als Polyol-Komponente eingesetzt werden. Als Beispiel sei hier nur das Rizinusöl genannt.

Im Rahmen des erfindungsgemäßen Verfahrens sind als Polyole Polyetherpolyole bevorzugt, insbesondere solche Polyetherpolyole, die durch Umsetzung von Glycerin-Propylenoxid-Addukten und Polypropylenglykol dargestellt werden können.

Als Isocyanat-Komponente können sowohl aromatische als auch aliphatische oder auch cyclo-aliphatische Isocyanate Verwendung finden. Geeignete aromatische Di- und Triisocyanate sind beispielsweise 2,4-Diisocyanato-toluol, 2,6-Diisocyanato-toluol, Isomerengemische der beiden vorgenannten Verbindungen, 1,5-Diisocyanato-naphthalin, 1,4-Diisocyanato-benzol, 4,4′,4″-Triisocyanato-triphenylmethan, 4,4′-Diisocyanato-diphenylmethan, 2,4′-Diisocyanato-diphenylmethan, 2,2′-Diisocyanato-diphenylmethan,und Tris-(4-isocyanatophenyl)-thiophosphat. Übliche aliphatische bzw. cyclo-aliphatische Isocyanate sind 1,6-Diisocyanato-hexan und 1-Isocynato-3-isocyanatomethyl-3,5,5-trimethyl-cyclohexan.

Im Rahmen des erfindungsgemäßen Verfahrens sind aromatische Diisocyanate, insbesondere Diphenylmethan-4,4′-diisocyanat bevorzugt.

In einer besonders bevorzugten Ausführungsform des erfindungsgemäßen Verfahrens wird das Polyurethanprepolymere durch Umsetzung eines Glycerin-Propylenoxid-Adduktes, eines Polypropylenglykols und Diphenylmethan-4,4′-diisocyanat hergestellt.

In allen Fälle wird zur Bildung der Polyurethan-Prepolymeren das Isocyanat im Überschuß eingesetzt, so daß das gebildete Polyurethan-Prepolymere reaktive Isocyanat-Gruppen enthält.

Die Standfestigkeit von Fugendichtungsmassen wird in der Regel durch Zusatz von feinteiligen Feststoffen erzielt. Durch den Aufbau einer inneren Struktur erhält der Dichtstoff nach dem Aufspritzen den notwendigen inneren Halt, so daß das Auslaufen oder Ausbuchten der Dichtstoffpaste aus senkrechten Fugen verhindert wird. Die genannten Zusatzstoffe werden daher auch häufig als thixotropierende Füllstoffe oder Thixotropiermittel bezeichnet. Bei Fugendichtungsmassen auf der Basis von Polyurethan-Prepolymeren müssen an die Thixotropiermittel zusätzliche Anforderungen gestellt werden. So müssen beispielsweise unerwünschte Reaktionen mit den Isocyanatgruppen ausgeschlossen sein. Daher kommen als Thixotropiermittel im wesentlichen quellfähige Polymer-Pulver in Betracht. Beispiele hierfür sind Polyacrylnitril, Polyurethan, Polyvinylchlorid, Polyacrylsäureester, Polyvinylalkohole, Polyvinylacetate sowie die entsprechenden Copolymerisate. Besonders gute Ergebnisse werden üblicherweise mit feinteiligem Polyvinylchlorid-Pulver erhalten. Die Eigenschaft der Polyurethan-Fugendichtmasse läßt sich jedoch weiter verbessern, wenn dem als Thixotropiermittel verwendeten Kunststoff-Pulver weitere Komponenten zugesetzt werden. Bei diesen Komponenten handelt es sich um Stoffe, die unter die Kategorien der für Kunststoffe angewendeten Weichmacher und Quellmittel fallen. Dabei ist es jeweils notwendig, die optimale Zusammenstellung der Systeme Polyurethan-Prepolymer/Kunststoff-Pulver/Weichmacher/Quellhilfsmittel zu bestimmen. Dies wird für den Fachmann keine Schwierigkeiten bereiten. Zu den bei der Auswahl der Komponenten für solche Systeme üblicherweise anzustellenden Überlegungen kommt hier lediglich die Bedingung hinzu, daß Weichmacher und Quellhilfsmittel nicht mit den Isocyanatgruppen des Prepolymeren reagieren dürfen. Somit kommen zum Beispiel für PVC als Thixotropiermittel Weichmacher aus der Klasse der Phthalsäureester in Betracht. Beispiele für aus dieser Substanzklasse anwendbare Verbindungen sind das Di-octylphthalat, das Di-butyl-phthalat und das Benzyl-butyl-phthalat. Weitere Substanzklassen, die die geforderten Eigenschaften erfüllen, sind Chlorparaffine, Alkylsulfonsäureester von Phenol und Kresol sowie Fettsäureester. Besonders bevorzugt im Rahmen des erfindungsgemäßen Verfahrens sind Weichmacher auf der Basis eines Alkylsulfonsäureesters und Polyvinylchlorid als quellfähiges Polymer-Pulver.

Als Quellhilfsmittel sind solche niedermolekularen, organischen Substanzen einsetzbar, die mit dem Polymer-Pulver und dem Weichmacher mischbar sind und mit den Isocyanat-Gruppen des Polyurethan-Prepolymeren nicht reagieren. Wird ein Polymer-Pulver eingesetzt, bei dem kovalente Vernetzungen zwischen den Knäulen bestehen, so können als Quellhilfsmittel prinzipiell alle Lösungsmittel eingesetzt werden, die die oben erwähnten Anforderungen erfüllen und in denen das unvernetzte Polymere löslich ist. Sind dagegen die eingesetzten Kunststoffe nicht kovalent vernetzt, so können als Quellhilfsmittel nur solche Lösungsmittel eingesetzt werden, mit denen ein Solvatationsgleichgewicht entsteht, bei dem nicht alle Nebenvalenz-Bindungen zwischen den einzelnen Knäulen des Polymers durch Solvatation aufgehoben werden. Dies trifft dann nur auf solche Lösungsmittel zu, in denen die Polymeren nur wenig löslich sind. Der Fachmann wird also in diesem Fall solche Lösungsmittel als Quellhilfsmittel auswählen, in denen das Polymere nur schlecht bis mäßig gut löslich ist. Für diese Auswahl steht umfangreiches Datenmaterial in der bekannten Literatur (Polymer Handbook, Kunststoff Handbuch, etc.) zur Verfügung. Als bevorzugte Quellhilfsmittel für Polyvinylchlorid-Pulver dienen somit Ester, Ketone, aliphatische Kohlenwasserstoffe, aromatische Kohlenwasserstoffe sowie aromatische Kohlenwasserstoffe mit Alkylsubstituenten. Als besonders bevorzugte Quellhilfsmittel für Polyvinylchlorid-Pulver werden aromatische Kohlenwasserstoffe mit Alkylsubstituenten, insbesondere Xylol, verwendet.

Das in der erfindungsgemäßen Fugendichtungsmasse als Thixotropiermittel verwendete Gemisch aus Polyurethan-Prepolymer, Polymer-Pulver, Weichmacher und Quellhilfsmittel ist in Abhängigkeit von den im speziellen Fall an die Fugendichtungsmasse gestellten Anforderungen gezielt aufeinander abzustimmen.

Bevorzugt im Rahmen der erfindungsgemäßen Lehre sind solche Fugendichtungsmassen, die aus

> 25 - 35 Gew.-% Polyurethan-Prepolymer
> 25 - 35 Gew.-% quellfähige Polymerpulver
> 20 - 30 Gew.-% Weichmacher (Quellmittel)
> 3 - 7 Gew.-% Quellhilfsmittel
> 4 - 9 Gew.-% Pigmente und Farbstoffe
> 0,01 - 2 Gew.-% Katalysatoren und sonstige Hilfsstoffe
> 1 - 5 Gew.-% Stabilisierungsmittel

bestehen.

Sowohl Polyurethanprepolymere als auch Fugendichtmassen bestehend aus Polyurethanprepolymeren sowie einem System aus quellfähigem Polymer-Pulver, Weichmacher und Quellhilfsmittel, zeigen häufig nur eine unbefriedigende Lagerstabilität. Aus diesem Grund werden daher häufig Substanzen hinzugesetzt, die die Funktion eines Stabilisierungsmittels gegen Oxidation, Wärme, Licht bzw. Hydrolyse erfüllen. Bekannte Stabilisatoren sind Benzoylchlorid, Acetylchlorid, Toluolsulfonsäuremethylester, Carbodiimide und Polycarbodiimide.

Es wurde nun gefunden, daß Olefine mit 8 bis 20 Kohlenstoff-Atomen sehr gute Stabilisatoren für Fugendichtungsmassen sind, die gleichzeitig mit der stabilisierenden Wirkung auch Aufgaben von Weichmachern bzw. Quellmitteln übernehmen können, so daß sie in größeren Konzentrationen und diese teilweise ersetzend eingesetzt werden können. So senken die Olefine, ähnlich wie die aromatischen Quellmittel, die Viskosität der Fugendichtungsmasse, wodurch die gewünschte leichte Verspritzbarkeit erzielt wird, sind im Gegensatz zu den aromatischen Kohlenwasserstoffen jedoch schwerer flüchtig, besitzen einen höheren Flammpunkt und sind auch wegen ihrer geringeren Toxizität und Cancerogenität als teilweiser Ersatz für die üblichen Quellmittel zu bevorzugen. Als erfindungsgemäße Stabilisierungsmittel können somit Verbindungen aus der Reihe Octen, Nonen, Decen, Undecen, Dodecen, Tridecen, Tetradecen, Pentadecen, Hexadecen, Heptadecen, Octadecen, Nonadecen und Eicosen eingesetzt werden. Weitere Stabilisierungsmittel für erfindungsgemäße Mischungen sind die analogen, verzweigten Olefine mit 8 bis 20 Kohlenstoffatomen sowie die analogen mehrfach olefinisch ungesättigten Substanzen. Bevorzugte Stabilisierungsmittel sind dabei Olefine mit 8 bis 16 Kohlenstoffatomen. Ebenfalls bevorzugte Stabilisatormaterialien sind Olefine, deren Doppelbindung in 1,2-Stellung angeordnet ist sowie Olefine, die keine Molekülverzweigung aufweisen. Ganz besonders bevorzugte Stabilisatormaterialien sind Octen-(1), Decen-(1), Dodecen-(1) und Hexadecen-(1), wobei innerhalb dieser Gruppe wiederum das Dodecen-(1) ganz besonders bevorzugt wird.

Als Pigmente und Farbstoffe in der erfindungsgemäßen Fugendichtungsmasse kommen die für Fugendichtungsmassen üblichen Substanzen wie Titandioxid, Eisenoxid und Ruß in Frage.

Daneben enthalten die Fugendichtungsmassen noch Katalysatoren wie Dibutylzinn-dilaurat, -diacetat, -diversatat und Zinn(II)-octoat zur Reaktionsbeschleunigung.

Unter sonstigen Hilfsstoffen im Rahmen der erfindungsgemäßen Lehre sind beispielsweise Härter, Trockner, Stabilisatoren und Haftvermittler zu verstehen.

Im Rahmen der erfindungsgemäßen Lehre wird eine Fugendichtungsmasse beschrieben, die durch Zugabe von Olefinen als Stabilisatoren über eine gegenüber dem Stand der Technik deutlich verbesserte Lagerstabilität verfügt.

Die erfindungsgemäße Lehre wird an folgenden Beispielen näher erläutert.

## Beispiele

### Beispiel 1:

Darstellung des Polyurethan-Prepolymeren

In einem beheizbaren Mischgefäß wurden unter Stickstoff-Atmosphäre bei 80 °C 267 g eines Glycerin-PO-Adduktes mit einem Molekulargewicht von etwa 4.000, 800 g eines Polypropylenglykols mit einem Molekulargewicht von etwa 2.000, sowie 207,5 g Diphenylmethan-diisocyanat 5,5 Stunden unter kräftigem Rühren erhitzt. Nach Abschluß der Reaktion wurde im Prepolymer ein NCO-Gehalt von 2,2 % bezogen auf die Gesamtmasse des Prepolymeren bestimmt.

Auf der Basis dieser Prepolymeren wurden verschiedene Fugendichtungsmassen folgender Zusammensetzung hergestellt:

4

| | |
|---|---|
| 1280 Teile | Polyurethan-Prepolymer |
| 1160 Teile | Quellfähiges Polymer-Pulver (feinteiliges Polyvinylchlorid-Pulver mit einem k-Wert von etwa 70) |
| 960 Teile | Weichmacher (Pentadecansulfonsäurealkylphenolester (Mesamoll [R], Fa.Bayer)) |
| 157 Teile | Quellhilfsmittel (Xylol, wasserfrei) |
| 280 Teile | Pigmente (trockenes, nach dem Chlorid-Verfahren hergestelltes Titandioxid-Rutil-Pigment) |
| 1 Teil | Katalysator (Dibutylzinn-dilaurat) |
| 120 Teile | Stabilisator |

Als Stabilisatoren wurden folgende Substanzen eingesetzt:

Beispiel 1:     Octen-1
Beispiel 2:     Decen-1
Beispiel 3:     Dodecen-1
Beispiel 4:     Tetradecen-1
Beispiel 5:     Hexadecen-1
Vergleichsbeispiel A:     ./.
Vergleichsbeispiel B:     Propylbenzol
Vergleichsbeispiel C:     Dodecan

Die nach DIN 52 456 gemessenen Extrusionsraten sind in Tabelle I zusammengestellt.

Tabelle I: Extrusionsraten (g/min)

| Beispiele | 1 | 2 | 3 | 4 | 5 | A | B | C |
|---|---|---|---|---|---|---|---|---|
| Lagerung bei 23 °C | | | | | | | | |
| nach 1 Woche | 264 | 208 | 252 | 292 | 324 | 79 | 170 | 207 |
| nach 4 Wochen | 231 | 231 | 225 | 193 | 256 | 40 | 142 | 156 |
| nach 32 Wochen | 129 | 118 | 137 | 98 | 123 | 0 | 76 | 0 |
| Lagerung bei 50 °C | | | | | | | | |
| nach 1 Woche | 124 | 153 | 150 | 149 | 191 | 16 | 65 | 107 |
| nach 6 Wochen | 90 | 73 | 93 | 46 | 91 | 0 | 0 | 0 |

Die Extrusionsraten zeigen den Vorteil der olefinische Stabilisatoren enthaltenden Fugendichtungsmassen gegenüber den Vergleichsproben.

6

**Patentansprüche**

1. Feuchtigkeitshärtende Fugendichtungsmassen auf Basis von Polyurethanprepolymeren, quellfähigen Polymerpulvern, Weichmachern und weiteren Hilfsstoffen, dadurch gekennzeichnet, daß sie enthalten:

>      20 - 40 Gew.-% Polyurethan-Prepolymer
>      20 - 40 Gew.-% quellfähige Polymerpulver
>      15 - 35 Gew.-% Weichmacher (Quellmittel)
>       1 - 10 Gew.-% Quellhilfsmittel
>       1 - 10 Gew.-% Pigmente und Farbstoffe
>    0,01 - 10 Gew.-% Katalysatoren und sonstige Hilfsstoffe
>       1 - 10 Gew.-% Stabilisierungsmittel,

   wobei als Stabilisierungsmittel Olefine der Kettenlänge C8 - C20 enthalten sind.

2. Fugendichtungsmassen nach Anspruch 1, dadurch gekennzeichnet, daß sie enthalten:

>      25 - 35 Gew.-% Polyurethan-Prepolymer
>      25 - 35 Gew.-% quellfähige Polymerpulver
>      20 - 30 Gew.-% Weichmacher (Quellmittel)
>       3 - 7 Gew.-% Quellhilfsmittel
>       4 - 9 Gew.-% Pigmente und Farbstoffe
>    0,01 - 2 Gew.-% Katalysatoren und sonstige Hilfsstoffe
>       1 - 5 Gew.-% Olefine der Kettenlänge C8-C20 als Stabilisierungsmittel

3. Fugendichtungsmassen nach Anspruch 1 und/oder 2, dadurch gekennzeichnet, daß die enthaltenen Olefine mindestens eine der nachfolgenden Eigenschaften aufweisen: Kettenlänge 8 - 16 C-Atome, vorzugsweise 12 C-Atome, Doppelbindung in 1,2-Stellung und keine Molekülverzweigung.

4. Fugendichtungsmassen nach einem der Ansprüche 1 bis 3, dadurch gekennzeichnet, daß als Polyurethan-Prepolymeres ein Umsetzungsprodukt eines Polyetherpolyols mit einem Überschuß eines aromatischen Diisocyanats enthalten ist.

5. Fugendichtungsmassen nach einem der Ansprüche 1 bis 4, dadurch gekennzeichnet, daß als quellfähige Polymerpulver Polymere ohne funktionelle Gruppen, die mit Isocyanaten reagieren können, enthalten sind, wie beispielsweise Polyurethane, Polyacryl- und Polymethacrylsäureester, sowie insbesondere Polyvinylchlorid.

6. Fugendichtungsmassen nach einem der Ansprüche 1 bis 5, dadurch gekennzeichnet, daß als Weichmacher PVC-Weichmacher insbesondere weichmachende Ester wie Phthalsäureester, Alkylsulfonsäureester oder aber Chlorparaffine enthalten sind.

7. Fugendichtungsmassen nach einem der Ansprüche 1 bis 6, dadurch gekennzeichnet, daß als Quellhilfsmittel organische Lösungsmittel wie Ester, Ketone, aliphatische Kohlenwasserstoffe und insbesondere aromatische Kohlenwasserstoffe eingesetzt werden.

**Claims**

1. Moisture-curing joint sealing compounds based on polyurethane prepolymers, swellable polymer powders, plasticizers and other auxiliaries, characterized in that they contain

20 to 40% by weight polyurethane prepolymers,
20 to 40% by weight swellable polymer powders,
15 to 35% by weight plasticizer (swelling agent),
1 to 10% by weight swelling aids,
1 to 10% by weight pigments and dyes,
0.01 to 10% by weight catalysts and other auxiliaries,
1 to 10% by weight stabilizers,

$C_{8-20}$ olefins being present as the stabilizers.

2. Joint-sealing compounds as claimed in claim 1, characterized in that they contain

25 to 30% by weight polyurethane prepolymer,
25 to 35% by weight swellable polymer powders,
20 to 30% by weight plasticizers (swelling agents).
3 to 7% by weight swelling aids,
4 to 9% by weight pigments and dyes,
0.01 to 2% by weight catalysts and other auxiliaries,
1 to 5% by weight $C_{8-20}$ olefins as stabilizers.

3. Joint-sealing compounds as claimed in claim 1 and/or 2, characterized in that the olefins present have at least one of the following properties: chain length 8-16 C atoms, preferably 12 C atoms, double bond in the 1,2-position and no branching of the molecule.

4. Joint-sealing compounds as claimed in any of claims 1 to 3, characterized in that a reaction product of a polyether polyol with an excess of an aromatic diisocyanate is present as the polyurethane prepolymer.

5. Joint-sealing compounds as claimed in any of claims 1 to 4, characterized in that they contain as swellable polymer powders polymers without any functional groups capable of reacting with isocyanates, such as for example polyurethanes, polyacrylates and polymethacrylates and, in particular, polyvinyl chloride.

6. Joint-sealing compounds as claimed in any of claims 1 to 5, characterized in that they contain as plasticizers PVC plasticizers, particularly plasticizing esters, such as phthalic acid esters, alkyl sulfonic acid esters or chloroparaffins .

7. Joint-sealing compounds as claimed in any of claims 1 to 6, characterized in that organic solvents, such as esters, ketones, aliphatic hydrocarbons and, in particular, aromatic hydrocarbons are used as the swelling aids.

**Revendications**

1. Matières pour garnitures de joints, durcissant à l'humidité, à base de prépolymères polyuréthanne, de poudres de polymères aptes à gonfler, de plastifiants et d'autres additifs, caractérisées en ce qu'elles contiennent :
   - de 20 à 40 % en poids de prépolymère polyuréthanne,
   - de 20 à 40 % en poids de poudre de polymère apte à gonfler,
   - de 15 à 35 % en poids de plastifiant (agent de gonflement),
   - de 1 à 10 % en poids d'auxiliaire de gonflement,
   - de 1 à 10 % en poids de pigments et colorants,
   - de 0,01 à 10 % en poids de catalyseurs et autres produits auxiliaires,
   - de 1 à 10 % en poids de stabilisants,
   - des oléfines de longueur de chaîne en $C_8$ à $C_{20}$ étant contenues, en tant que stabilisant.

2. Matières pour garnitures de joints selon la revendication 1, caractérisées en ce qu'elles contiennent :
   - de 25 à 35 % en poids de prépolymère polyuréthanne,

- de 25 à 35 % en poids de poudre de polymère apte à gonfler,
- de 20 à 30 % en poids de plastifiant (agent de gonflement),
- de 3 à 7 % en poids d'auxiliaire de gonflement,
- de 4 à 9 % en poids de pigments et colorants,
- de 0,01 à 2 % en poids de catalyseurs et autres produits auxiliaires,
- de 1 à 5 % en poids d'oléfines de longueur de chaîne en $C_8$-$C_{20}$, en tant que stabilisant.

3. Matières pour garnitures de joints selon la revendication 1 et/ou 2, caractérisées en ce que les oléfines contenues présentent au moins l'une des propriétés suivantes : longueur de chaîne de 8-16 atomes de carbone, de préférence 12 atomes de C, double liaison en position 1-2 et aucune ramification de la molécule.

4. Matières pour garnitures de joints selon l'une quelconque des revendications 1 à 3, caractérisées en ce que, en tant que prépolymère polyuréthanne, est contenu un produit de réaction d'un polyéther-polyol avec un excès d'un diisocyanate aromatique.

5. Matières pour garnitures de joints selon l'une quelconque des revendications 1 à 4, caractérisées en ce que, en tant que poudre de polymère apte au gonflement, sont contenus des polymères sans groupes fonctionnels, pouvant réagir avec des isocyanates, par exemple des polyuréthannes, des poly(ester d'acide acrylique ou méthacrylique)s, ainsi qu'en particulier du poly(chlorure de vinyle).

6. Matières pour garnitures de joints selon l'une quelconque des revendications 1 à 5, caractérisées en ce que, en tant que plastifiants, sont contenus des plastifiants de type PVC, en particulier des esters plastifiants tels que des esters d'acide phtalique, des esters d'acides alkylsulfoniques ou bien des chloroparaffines.

7. Matières pour garnitures de joints selon l'une quelconque des revendications 1 à 6, caractérisées en ce que, en tant qu'auxiliaire de gonflement, on utilise des solvants organiques tels que des esters, cétones, hydrocarbures aliphatiques et en particulier des hydrocarbures aromatiques.